# FASCICULE DE BREVET EUROPEEN

(11) **EP 2 181 307 B1**
(45) Date de publication et mention de la délivrance du brevet: **16.03.2011**
(21) Numéro de dépôt: 08840913.1
(22) Date de dépôt: 04.08.2008
(51) Int. Cl.: G01C 23/00, G01C 21/36

(54) **PROCÉDÉ ET DISPOSITIF DE TRANSMISSION DE DONNÉES GÉOGRAPHIQUES SUR UN AÉRONEF**
VERFAHREN UND VORRICHTUNG ZUR ÜBERTRAGUNG GEOGRAPHISCHER DATEN IN EINEM FLUGZEUG
METHOD AND DEVICE FOR TRANSMITTING GEOGRAPHICAL DATA ON AN AIRCRAFT

(30) Priorité: 20.08.2007 FR 0705905
(43) Date de publication de la demande: 05.05.2010
(73) Titulaire: AIRBUS OPERATIONS (SAS), 31060 Toulouse (FR)
(72) Inventeur: SAUVALLE, Thomas, F-31000 Toulouse (FR); PEYRUCAlN, Eric, F-31180 Saint Genies Bellevue (FR); BOURDAIS, André, F-31000 Toulouse (FR)
(74) Mandataire: Bloch & Bonnétat
(86) Numéro de dépôt international: PCT/FR2008/001167
(87) Numéro de publication internationale: WO 2009/053556

(56) Documents cités:
- FR-A- 2 852 097
- FR-A- 2 874 371
- FR-A- 2 883 964
- FR-A- 2 884 020

## Description

La présente invention concerne un procédé et un dispositif de transmission de données géographiques entre au moins un système fournisseur et au moins un système utilisateur qui sont embarqués sur un aéronef.

On sait qu'un aéronef, en particulier un avion de transport, comporte plusieurs calculateurs qui sont destinés à faciliter (ou réaliser) la gestion de certaines tâches de pilotage, de navigation et/ou de surveillance, et qui utilisent, pour la mise en oeuvre d'au moins certaines de leurs fonctions, des données géographiques. A titre d'illustration, on peut citer un système de gestion de vol de type FMS (" Flight Management System" en anglais), un système de navigation aéroportuaire de type OANS ("On-board Airport Navigation System" en anglais), et un système de surveillance de l'environnement de type AESS ("Aircraft Environment Surveillance System" en anglais).

Pour ce faire, ces différents systèmes comportent chacun ou sont associés chacun à une base de données géographiques. Ainsi, un système de type OANS comporte une base de données contenant au moins des informations de cartographie d'aéroport, et un système de type AESS comporte un base de données contenant au moins des informations relatives au relief du terrain. Par les documents FR-2 884 020 et FR-2 883 964, on connaît un dispositif d'aide à la navigation aéroportuaire.

On sait que de tels systèmes embarqués, qui utilisent des données géographiques, comme un système de gestion de vol par exemple, comprennent souvent un protocole dédié à un format propriétaire, qui leur permet de gérer efficacement l'interface entre le coeur du système et la base de données géographiques associée, à savoir une base de données de navigation dans le cas d'un système de gestion de vol de type FMS. Ce protocole est optimisé localement pour un système de manière à réduire au maximum le temps de réponse suite à une requête externe, lors d'une demande d'un pilote via une interface du système FMS par exemple.

Dans une architecture usuelle, chaque système embarqué, utilisateur de données géographiques, comporte sa propre base de données géographiques. Aussi, chaque système optimise localement son utilisation de sorte que l'aéronef comporte autant de protocoles différents. C'est pourquoi, si un nouveau système a besoin d'une première donnée géographique qui est contenue dans la base de données d'un premier système, il doit s'abonner à ce premier système et doit acquérir cette première donnée à travers lui. Cette première donnée passe donc via le protocole dédié audit premier système avant d'arriver à ce nouveau système. Si ce nouveau système a besoin ensuite d'une seconde donnée géographique qui est enregistrée dans la base de données d'un second système, cette seconde donnée doit passer par l'intermédiaire du protocole dédié audit second système, avant d'arriver audit nouveau système. Par conséquent, les données passent par différents protocoles et différents systèmes.

Une telle architecture usuelle, dans laquelle un protocole est associé à chaque base de données faisant partie d'un système, présente de nombreux inconvénients. En particulier :
- les envois à un système utilisateur de différentes données géographiques peuvent provenir de différents systèmes pour une même région géographique. Ces envois ne sont ni synchronisés, ni organisés, ce qui peut provoquer par exemple des affichages transitoires sur un écran du poste de pilotage, relatifs à des informations géographiques partielles. A titre d'exemple, il peut arriver que les données géographiques (point de vol, balise radio, ...) qui sont enregistrées dans la base de données du système FMS sont affichées sur un écran de navigation, alors que les données géographiques associées (terrain, obstacle, météo) qui sont enregistrées dans la base de données du système AESS ne le sont pas encore ;
- l'utilisation des données géographiques n'est pas optimisée. Les différents systèmes comportent des bases de données géographiques qui concernent parfois tout le globe terrestre et qui nécessitent donc des mémoires de taille importante, alors que, pour un vol donné, les systèmes utilisateurs de l'aéronef ne nécessitent qu'une partie de ces données géographiques enregistrées. Ainsi, les risques de corruption des données géographiques sont multipliés et diversifiés ; et
- les données géographiques passent par différents protocoles, ce qui accroît la complexité de leur utilisation et diminue les possibilités d'évolution de l'utilisation de données géographiques à bord de l'aéronef. En particulier, un nouveau système utilisateur doit, en général, respecter différents protocoles pour recueillir les données géographiques dont il a besoin.

La présente invention concerne un procédé de transmission de données géographiques entre au moins un système fournisseur et au moins un système utilisateur qui sont embarqués sur un aéronef, ce procédé permettant de remédier aux inconvénients précités.

A cet effet, selon l'invention, ledit procédé est remarquable en ce que :
A/ dans une étape préliminaire :
   - on découpe une surface géographique globale relative à l'ensemble desdites données géographiques et correspondant à au moins une partie du globe (et généralement à l'ensemble du globe terrestre), en une pluralité de surfaces unitaires, qui sont des surfaces géographiques disjointes (c'est-à-dire qui n'ont aucun élément commun), et dont la réunion couvre toute ladite surface géographique globale ;
   - pour chacune desdites surfaces unitaires, on regroupe les données géographiques relatives à une surface unitaire, en une pluralité de groupes différents, dont chacun comprend les données géographiques relatives à au moins une caractéristique particulière (point de vol, balise de radionavigation, profil du terrain, ...) susceptible d'être utilisée lors d'un vol de l'aéronef, lesdits groupes étant formés de sorte que toutes lesdites données géographiques sont prises en compte ; et
   - on enregistre lesdites données géographiques de façon ordonnée dans au moins une base de données dudit système fournisseur, en réalisant un classement par surfaces unitaires et dans chaque surface unitaire un sous-classement par groupes, chaque groupe comprenant les données géographiques correspondantes ; et
B/ dans une étape ultérieure, lors d'un vol notamment :
   a) lorsque le système utilisateur désire obtenir des données géographiques particulières, il émet une demande par l'intermédiaire d'une liaison de transmission de données audit système fournisseur, ladite demande permettant d'identifier au moins une surface unitaire et permettant de plus, pour chaque surface unitaire identifiée, d'identifier au moins un groupe ;
   b) lorsqu'une telle demande est reçue par ledit système fournisseur, ce dernier recherche dans ladite base de données les données géographiques qui se trouvent dans l'ensemble des groupes identifiés dans la demande, et ceci pour l'ensemble des surfaces unitaires également identifiées dans cette demande ; et
   c) ledit système fournisseur transmet lesdites informations géographiques, par surface unitaire identifiée, et pour chaque surface unitaire par groupe identifié, audit système utilisateur par l'intermédiaire de ladite liaison de transmission de données.

Ainsi, grâce à l'invention, la transmission des données géographiques entre un système fournisseur et un système utilisateur est réalisée par surface unitaire (ou unité de surface) qui représente une partie du globe terrestre. Une telle transmission permet de mieux gérer le traitement de données géographiques par le système utilisateur, que ce soit pour l'affichage (synchronisation, affichage partiel, ...) ou pour toute autre utilisation, comme précisé ci-dessous.

De plus, le procédé de transmission de données géographiques, conforme à l'invention, permet d'optimiser le flux d'échanges de données à bord, en réduisant le nombre de données échangées. En effet, les systèmes s'échangent uniquement les surfaces unitaires qui leur sont strictement nécessaires. Cela optimise le temps de réponse qui résulte de cet échange, le nombre de données échangées étant proche du nombre de données nécessaires selon la taille choisie pour chaque unité de surface. Ce protocole prend tout son sens en cas d'échange de volumes importants de données.

Pour réaliser une transmission de données conforme à l'invention, un système utilisateur demande un nombre particulier de surfaces unitaires et il précise les groupes (qu'il demande pour ces surfaces unitaires). Comme indiqué ci-dessus, chaque groupe comprend les données géographiques relatives à au moins une caractéristique particulière qui est susceptible d'être utilisée lors d'un vol, et en particulier des points de vol, des balises de radionavigation, le profil du terrain et/ou des informations météorologiques.

En outre, le procédé conforme à l'invention présente des capacités d'évolution accrues. La syntaxe du langage est la même pour tous les systèmes utilisateurs de données géographiques de l'aéronef. Aussi, à partir du moment où un nouveau système utilisateur respecte ce langage, il améliore l'échange des données géographiques dont il a besoin, auprès des autres systèmes existants, avec un impact faible :
- il n'y a pas ou peu de modifications à réaliser sur le système fournisseur existant ; et
- il n'y a pas de nouveau protocole à développer.

Dans un mode de réalisation particulier, chaque surface unitaire est une surface sensiblement rectangulaire, dont un premier côté présente une longueur correspondant à une valeur de latitude prédéterminée, par exemple un degré de latitude, et dont un second côté (adjacent à ce premier côté) présente une longueur correspondant à une valeur de longitude prédéterminée, par exemple un degré de longitude.

En outre, en variante, ladite surface géographique globale peut également être découpée en surfaces unitaires, en fonction d'au moins un des ensembles de caractéristiques suivantes :
- des frontières d'états ;
- des fuseaux horaires ;
- des zones de contrôle aérien.

La présente invention peut être appliquée à tout type de transmission de données géographiques sur un aéronef. De plus, la transmission de données peut être mise en oeuvre de différentes manières.

Premièrement, de façon avantageuse, la transmission de données géographiques concerne un ensemble de surfaces unitaires permettant de couvrir un couloir de largeur prédéterminée le long d'un plan de vol. Cette transmission peut, notamment, être utilisée pour fournir des informations à un système de gestion de vol de type FMS. Dans ce cas, pour optimiser la transmission de données, de façon avantageuse, lesdites surfaces unitaires sont transmises, successivement, selon leur position géographique le long du plan de vol, dans le sens correspondant au vol de l'aéronef suivant ce plan de vol.

Deuxièmement, de façon avantageuse, la transmission de données géographiques concerne une zone de taille prédéterminée qui est située autour de la position courante de l'aéronef, par exemple dans un rayon de 320 mille nautique (environ 600 km) autour de l'aéronef. Cette transmission peut, en particulier, être utilisée par un système de surveillance de type AESS, pour lequel les données géographiques transmises concernent uniquement le groupe relatif au profil du terrain (pour les surfaces unitaires demandées).

Troisièmement, de façon avantageuse, la transmission de données géographiques concerne des aéroports susceptibles d'être impliqués par un vol de l'aéronef, en particulier l'aéroport de départ, l'aéroport d'arrivée, et éventuellement un aéroport de déroutement. Cette transmission peut, notamment, être utilisée par un système de navigation aéroportuaire de type OANS.

La présente invention concerne également un dispositif de transmission de données géographiques entre au moins un système fournisseur et au moins un système utilisateur, qui sont embarqués tous les deux sur un aéronef, en particulier un avion de transport.

A cet effet, selon l'invention, ledit dispositif qui comporte ledit système fournisseur et ledit système utilisateur, est remarquable en ce que :
- ledit système fournisseur comporte au moins une base de données, dans laquelle sont enregistrées lesdites données géographiques, et ceci de façon ordonnée à l'aide d'un classement par surfaces unitaires et dans chaque surface unitaire d'un sous-classement par groupes, lesdites surfaces unitaires étant des surfaces géographiques qui sont disjointes et dont la réunion couvre une surface géographique globale (relative à toutes lesdites données géographiques et correspondant à au moins une partie du globe terrestre), chacun desdits groupes comprenant les données géographiques relatives à au moins une caractéristique particulière susceptible d'être utilisée lors d'un vol de l'aéronef, et lesdits groupes étant formés de sorte que toutes lesdites données géographiques sont prises en compte ;
- ledit système utilisateur comporte des moyens susceptibles d'émettre une demande en vue d'obtenir des données géographiques, ladite demande permettant d'identifier au moins une surface unitaire et permettant de plus, pour chaque surface unitaire identifiée, d'identifier au moins un groupe (relatif à une caractéristique particulière, comme précité) ;
- ledit système fournisseur comporte de plus :
   ■ des moyens pour rechercher dans la base de données les données géographiques qui se trouvent dans l'ensemble des groupes identifiés dans une demande reçue, et ceci pour l'ensemble des surfaces unitaires également identifiées dans cette demande ; et
   ■ des moyens pour émettre lesdites données géographiques, par surface unitaire identifiée, et pour chaque surface unitaire, par groupe identifié ; et
- ledit dispositif comporte, de plus, au moins une liaison de transmission de données :
   ■ qui est susceptible de transmettre une demande du système utilisateur au système fournisseur ; et
   ■ qui est susceptible de transmettre des données géographiques du système fournisseur au système utilisateur.

Bien entendu, un même système de l'aéronef peut être successivement un système fournisseur (lorsqu'il fournit des données géographiques qui sont enregistrées dans sa base de données) et un système utilisateur (lorsqu'il demande à un autre système des données géographiques dont il a besoin). Toutefois, dans un mode de réalisation préféré, ledit système fournisseur est un serveur de base de données, auquel sont reliés de nombreux systèmes utilisateurs de l'aéronef.

La présente invention concerne également un aéronef qui comporte un dispositif de transmission de données géographiques, tel que celui précité.

Les figures du dessin annexé feront bien comprendre comment l'invention peut être réalisée. Sur ces figures, des références identiques désignent des éléments semblables.

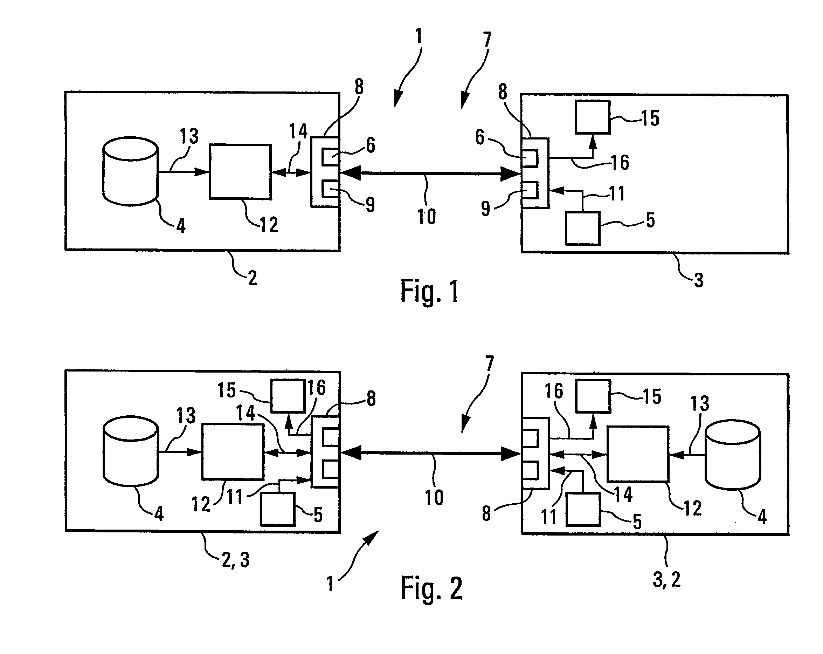

Les figures 1 à 3 sont les schémas synoptiques de différents modes de réalisation d'un dispositif de transmission de données géographiques, conforme à l'invention.

Le dispositif 1 conforme à l'invention et représenté dans un mode de réalisation de base sur la figure 1 est destiné à transmettre des données géographiques entre au moins un système fournisseur 2 et au moins un système utilisateur 3, qui sont tous deux embarqués sur un aéronef, en particulier un avion de transport.

Ledit système fournisseur 2 est un système qui comporte une base de données 4 contenant des données géographiques et qui est donc en mesure de fournir de telles données géographiques. Par données géographiques, on entend des informations relatives à des éléments qui sont situés à la surface du globe terrestre, informations qui sont susceptibles d'être utilisées lors d'un vol d'un aéronef. De façon usuelle, cette base de données 4 peut, soit être intégrée directement dans ledit système fournisseur 2, soit être reliée à ce système fournisseur 2 par des moyens de liaison usuels. A titre d'illustration, ce système fournisseur 2 peut être :
- un système de navigation aéroportuaire de type OANS ("On-board Airport Navigation System" en anglais), dont la base de données contient au moins des informations de cartographie d'aéroport ;
- un système de surveillance de l'environnement de type AESS ("Aircraft Environment Surveillance System" en anglais), dont la base de données contient au moins des informations relatives au relief du terrain ; ou
- un système de gestion de vol de type FMS ("Flight Management System" en anglais), dont la base de données contient au moins des données de navigation.

Ledit système utilisateur 3 est un système qui utilise pour la mise en oeuvre d'au moins certaines de ses fonctions des données géographiques. Comme exemple de système utilisateur 3, on peut également citer un système de gestion de vol de type FMS, un système de navigation aéroportuaire de type OANS, et un système de surveillance de l'environnement de type AESS.

Ledit dispositif 1 de transmission de données géographiques est embarqué sur l'aéronef et comporte au moins un système fournisseur 2 et au moins un système utilisateur 3.

De plus, selon l'invention, ledit système fournisseur 2 comporte au moins une base de données 4, dans laquelle sont enregistrées lesdites données géographiques, et ceci de façon ordonnée à l'aide d'un classement par surfaces unitaires, et dans chaque surface unitaire, d'un sous-classement par groupes. Selon l'invention, les surfaces unitaires sont des surfaces géographiques qui sont disjointes (c'est-à-dire qui n'ont aucun élément commun) et dont la réunion couvre une surface géographique globale (relative à toutes lesdites données géographiques et correspondant à au moins une partie du globe terrestre, et généralement à l'ensemble du globe terrestre). De plus, chacun desdits groupes comprend les données géographiques relatives à au moins une caractéristique particulière susceptible d'être utilisée lors d'un vol de l'aéronef, et lesdits groupes sont formés de sorte que toutes lesdites données géographiques sont prises en compte.

De plus, selon l'invention :
- ledit système utilisateur 3 comporte :
   ■ des moyens 5 qui sont susceptibles d'émettre une demande en vue d'obtenir des données géographiques. Ces moyens 5 peuvent être, soit des moyens automatiques qui réalisent de façon automatique une demande de données géographiques, soit des moyens d'actionnement qui permettent à un opérateur, notamment le pilote de l'aéronef, de former une demande de données géographiques. Selon l'invention, lesdits moyens 5 engendrent une demande qui permet d'identifier au moins une surface unitaire telle que précitée et qui permet de plus, pour chaque surface unitaire qui est susceptible d'être identifiée par cette demande, d'identifier au moins également un groupe (qui dans le cadre de la présente invention et comme indiqué précédemment, est relatif à une caractéristique particulière susceptible d'être utilisée lors d'un vol de l'aéronef) ; et
   ■ des moyens d'émission 6 qui permettent d'émettre la demande engendrée par lesdits moyens 5 ;
- le dispositif 1 comporte, de plus, un système de transmission de données 7. Ce dernier comporte un premier dispositif d'émission/réception 8 qui est installé sur le système utilisateur 2, qui comprend des moyens d'émission 6 et des moyens de réception 9, et qui coopère avec un second dispositif d'émission/réception 8 similaire qui est monté sur ledit système utilisateur 3, auquel il est relié par l'intermédiaire d'une liaison de transmission de données 10 usuelle ; et
- ledit système fournisseur 2 comporte, de plus, des moyens 12 qui sont reliés par l'intermédiaire de liaisons 13 et 14 respectivement à ladite base de données 4 et audit dispositif d'émission/réception 8 et qui sont formés de manière à rechercher les données géographiques qui se trouvent dans les différents groupes qui ont été identifiés à l'aide d'une demande (émise par les moyens 5 du système utilisateur 3 et transmise auxdits moyens 12 via une liaison 11, le dispositif 8 du système utilisateur 3, la liaison de transmission de données 10, le dispositif 8 du système fournisseur 2 et la liaison 14).

Lesdits moyens 12 recherchent dans la base de données 4 (et extraient de cette dernière) l'ensemble des groupes identifiés dans la demande reçue, et ceci pour l'ensemble des surfaces unitaires également identifiées dans cette demande. Les données géographiques ainsi extraites de la base de données 4 sont ensuite transmises à des moyens utilisateurs 15 du système utilisateur 3 (via ladite liaison 14, ledit dispositif 8 du système utilisateur 2, ladite liaison de transmission de données 10, ledit dispositif 8 du système utilisateur 3 et une liaison 16).

Ladite liaison de transmission de données 10 qui est, par exemple, de type ARINC 429 ou de type AFDX, est donc susceptible :
- de transmettre une demande du système utilisateur 3 au système fournisseur 2 ; et
- de transmettre des données géographiques dudit système fournisseur 2 audit système utilisateur 3.

Ainsi, grâce au dispositif 1 conforme à l'invention, la transmission des données géographiques entre un système fournisseur 2 et un système utilisateur 3 est réalisée par surface unitaire (ou unité de surface) qui représente une partie du globe terrestre. Une telle transmission permet de mieux gérer le traitement de données géographiques par le système utilisateur 3, que ce soit pour l'affichage (synchronisation, affichage partiel, ...) ou pour toute autre utilisation, comme précisé ci-dessous.

Le dispositif 1 conforme à l'invention utilise le fait que les besoins en données géographiques pour les systèmes à bord de l'aéronef concernent généralement une même région du globe, à savoir une zone dépendant du vol, qui est généralement formée des deux zones suivantes :
- le voisinage immédiat de l'aéronef dans un rayon donné ; et
- une zone précise englobant le plan de vol prévu.

De plus, le dispositif 1 de transmission de données géographiques, conforme à l'invention, permet d'optimiser le flux d'échanges de données à bord, en réduisant le nombre de données échangées. En effet, les systèmes 2, 3 s'échangent uniquement les surfaces unitaires qui leur sont strictement nécessaires. Cela optimise le temps de réponse qui résulte de cet échange, le nombre de données échangées étant proche du nombre de données nécessaires selon la taille choisie pour chaque unité de surface. Ce protocole prend tout son sens en cas d'échange de volumes importants de données.

Pour réaliser une transmission de données conforme à l'invention, un système utilisateur 3 demande un nombre particulier de surfaces unitaires et il précise les groupes (qu'il demande pour ces surfaces unitaires). Comme indiqué ci-dessus, chaque groupe comprend les données géographiques relatives à au moins une caractéristique particulière qui est susceptible d'être utilisée lors d'un vol, et en particulier des points de vol, des balises de radionavigation, le profil du terrain et/ou des informations météorologiques.

En outre, le dispositif 1 conforme à l'invention présente des capacités d'évolution accrues. La syntaxe du langage est en effet la même pour tous les systèmes utilisateurs 3 du dispositif 1. Aussi, à partir du moment où un nouveau système utilisateur respecte ce langage, il améliore l'échange des données géographiques dont il a besoin, auprès des autres systèmes existants, avec un impact faible :
- il n'y a pas ou peu de modifications à réaliser sur le système fournisseur existant ; et
- il n'y a pas de nouveau protocole à développer.

Le langage étant commun, il est possible pour le système utilisateur 3 de mesurer précisément la quantité de données reçues par rapport à la quantité de données demandées. La décision de traiter ou non ces données reçues avant la fin du transfert se fait donc sur des bases claires, et selon un langage partagé avec le système fournisseur 2.

Dans un mode de réalisation particulier, chaque surface unitaire est une surface sensiblement rectangulaire, dont un premier côté présente une longueur correspondant à une valeur de latitude prédéterminée, par exemple un degré de latitude, et dont un second côté (adjacent à ce premier côté) présente une longueur correspondant à une valeur de longitude prédéterminée, par exemple un degré de longitude.

En outre, en variante, ladite surface géographique globale peut également être découpée en surfaces unitaires, en fonction d'au moins l'un des ensembles de caractéristiques suivantes :
- des frontières d'états ;
- des fuseaux horaires ;
- des zones de contrôle aérien (FIR).

On notera que, dans le cadre de la présente invention, il est possible :
- que toutes les surfaces unitaires ne présentent pas la même surface ; et/ou
- que toutes les surfaces unitaires ne présentent pas la même densité en données géographiques.

Dans un mode de réalisation particulier représenté sur la figure 2, un même système 2, 3 de l'aéronef peut être successivement un système fournisseur (lorsqu'il fournit des données géographiques qui sont enregistrées dans sa base de données 4) et un système utilisateur (lorsqu'il demande, à l'aide des moyens 5, à un autre système, des données géographiques dont il a besoin).

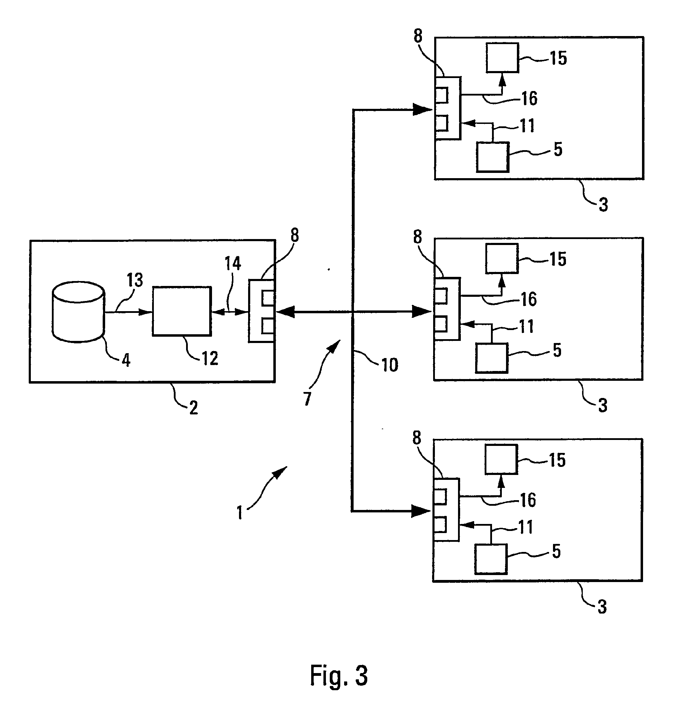

Par ailleurs, dans un mode de réalisation préféré, représenté sur la figure 3, ledit système fournisseur 2 est un serveur de base de données usuel, auquel sont reliés une pluralité de systèmes utilisateurs 3 de l'aéronef.

Avec un tel serveur de base de données, on peut centraliser dans la base de données 4 de ce serveur l'essentiel ou tout au moins une grande partie des données géographiques nécessaires aux différents systèmes utilisateurs 3 embarqués à bord de l'aéronef. Ceci permet de faciliter la transmission de données géographiques et de réduire l'encombrement.

Le dispositif 1 conforme à l'invention peut être appliqué à tous types de transmission de données géographiques sur un aéronef. On présente ci-après différents exemples de transmission de données géographiques possibles.

Dans un premier exemple, la transmission de données géographiques, mise en oeuvre par le dispositif 1, peut concerner un ensemble de surfaces unitaires permettant de couvrir un couloir de largeur prédéterminée le long du plan de vol de l'aéronef. Cette transmission peut, notamment, être utilisée pour fournir des informations à un système de gestion de vol de type FMS. Dans ce cas, dans une variante de réalisation préférée permettant d'optimiser la transmission de données, lesdites surfaces unitaires sont transmises, successivement, selon leur position géographique le long du plan de vol, dans le sens correspondant au vol de l'aéronef suivant ce plan de vol.

A titre d'illustration pour ce premier exemple de transmission, on considère un vol en ligne droite de Londres à Sydney (plan de vol EGLL/YSSY). Un majorant du nombre de surfaces unitaires de 1 degré de longitude par 1 degré de latitude, parcourues par un cercle d'un rayon de 320 NM (mille nautique) autour de l'aéronef, est : (longitude Sydney - longitude Londres) x largeur en latitude équivalant à 320 NM = 151x11 = 1661 surfaces unitaires.

Ainsi, lorsque le plan de vol EGLL/YSSY est entré dans un système de gestion de vol, de type FMS, ledit système FMS demande les groupes qui lui sont nécessaires dans les surfaces unitaires couvrant le plan de vol dans un couloir de 320 NM (environ 600 km) de part et d'autre de la trajectoire, soit les 1661 surfaces unitaires calculées précédemment.

On notera qu'avec les caractéristiques suivantes (1 degré de longitude par 1 degré de latitude), la surface du globe terrestre équivaut à 64800 surfaces unitaires. Par conséquent, l'ensemble des surfaces unitaires (1661) concernées par le vol précité ne représente qu'un quarantième environ de la surface totale du globe. Ceci permet bien entendu de réduire considérablement la quantité de données géographiques à transmettre.

Dans un deuxième exemple, la transmission de données géographiques, mis en oeuvre par le dispositif 1, peut concerner une zone de taille prédéterminée qui est située autour de la position courante de l'aéronef, par exemple dans un rayon de 320 NM (environ 600 km) autour de l'aéronef. Cette transmission peut, en particulier, être utilisée par un système de surveillance de l'environnement de type AESS, pour lequel les données géographiques transmises concernent uniquement le groupe relatif au profil du terrain (pour les surfaces unitaires demandées). Dans cet exemple, en tenant compte des caractéristiques précitées (1° de longitude par 1° de latitude), on obtient une surface autour de l'aéronef comprenant 121 surfaces unitaires. Pour optimiser la disponibilité de l'affichage, le système de surveillance AESS peut demander en priorité les surfaces unitaires qui se trouvent le plus près autour de l'aéronef.

Par ailleurs, dans un troisième exemple, la transmission de données géographiques, mise en oeuvre par le dispositif 1, peut concerner des aéroports susceptibles d'être impliqués par un vol de l'aéronef, en particulier l'aéroport de départ, l'aéroport d'arrivée, et éventuellement (au moins) un aéroport de déroutement potentiel. Cette transmission peut, notamment, être utilisée par un système de navigation aéroportuaire de type OANS.

Le dispositif 1 de transmission de données géographiques, conforme à l'invention, présente en outre les avantages suivants :
- les systèmes utilisateurs 3 peuvent demander en premier lieu les surfaces unitaires, dont le besoin est le plus urgent ;
- le mode d'échange est simple, et donc facilement utilisable pour un nouveau système utilisateur ;
- la structure en classes (surfaces unitaires) et en sous-classes (groupes) de la base de données 4 est très évolutive. Le nombre de surfaces unitaires n'évolue pas. En revanche, le nombre de sous-classes (ou groupes) peut évoluer, mais de manière bornée par la surface unitaire. On peut par exemple prendre comme hypothèse que dans une surface unitaire donnée, il n'y aura pas plus qu'un nombre prédéterminé d'aéroports. Ceci permet au système utilisateur 3 de borner le temps que prend la réponse à une demande de données géographiques, par surface unitaire ; et
- le protocole d'échange d'informations, conforme à l'invention, est robuste à la perte d'une fonction de serveur de données dans le mode de réalisation de la figure 3. En effet, dans les systèmes utilisateurs 3 enregistrent dans une mémoire locale les données géographiques dont ils ont besoin durant le vol de sorte que, lors d'une perte du serveur de données, les fonctions en cours d'exécution dans ces systèmes utilisateurs 3 ne sont pas perturbées.

## Revendications

1. Procédé de transmission de données géographiques entre au moins un système fournisseur (2) et au moins un système utilisateur (3) qui sont embarqués sur un aéronef,
**caractérisé en ce que** :
A/ dans une étape préliminaire :
- on découpe une surface géographique globale relative à l'ensemble desdites données géographiques et correspondant à au moins une partie du globe, en une pluralité de surfaces unitaires, qui sont des surfaces géographiques disjointes, dont la réunion couvre toute ladite surface géographique globale ;
- pour chacune desdites surfaces unitaires, on regroupe les données géographiques relatives à une surface unitaire, en une pluralité de groupes différents, dont chacun comprend les données géographiques relatives à au moins une caractéristique particulière susceptible d'être utilisée lors d'un vol de l'aéronef, lesdits groupes étant formés de sorte que toutes lesdites données géographiques sont prises en compte ; et
- on enregistre lesdites données géographiques de façon ordonnée dans au moins une base de données (4) dudit système fournisseur (2), en réalisant un classement par surfaces unitaires et dans chaque surface unitaire un sous-classement par groupes, chaque groupe comprenant les données géographiques correspondantes ; et
B/ dans une étape ultérieure :
a) lorsque le système utilisateur (3) désire obtenir des données géographiques particulières, il émet une demande par l'intermédiaire d'une liaison de transmission de données (10) audit système fournisseur (2), ladite demande permettant d'identifier au moins une surface unitaire et permettant de plus, pour chaque surface unitaire identifiée, d'identifier au moins un groupe ;
b) lorsqu'une telle demande est reçue par ledit système fournisseur (2), ce dernier recherche dans ladite base de données (4) les données géographiques qui se trouvent dans l'ensemble des groupes identifiés dans la demande, et ceci pour l'ensemble des surfaces unitaires également identifiées dans cette demande ; et
c) ledit système fournisseur (2) transmet lesdites informations géographiques, par surface unitaire identifiée, et pour chaque surface unitaire par groupe identifié, audit système utilisateur (3) par l'intermédiaire de ladite liaison de transmission de données (10).

2. Procédé selon la revendication 1,
**caractérisé en ce que** chaque surface unitaire est une surface sensiblement rectangulaire, dont un premier côté présente une longueur correspondant à une valeur de latitude prédéterminée et dont un second côté adjacent à ce premier côté présente une longueur correspondant à une valeur de longitude prédéterminée.

3. Procédé selon la revendication 1,
**caractérisé en ce que** ladite surface géographique globale est découpée en surfaces unitaires, en fonction d'au moins un des ensembles de caractéristiques suivantes :
- des frontières d'états ;
- des fuseaux horaires ;
- des zones de contrôle aérien.

4. Procédé selon l'une quelconque des revendications 1 à 3,
**caractérisé en ce que** la transmission de données géographiques concerne un ensemble de surfaces unitaires permettant de couvrir un couloir de largeur prédéterminée le long d'un plan de vol.

5. Procédé selon la revendication 4,
**caractérisé en ce que** lesdites surfaces unitaires sont transmises, successivement, selon leur position géographique le long du plan de vol, dans le sens correspondant au vol de l'aéronef suivant ce plan de vol.

6. Procédé selon l'une quelconque des revendications 1 à 3,
**caractérisé en ce que** la transmission de données géographiques concerne une zone de taille prédéterminée qui est située autour de la position courante de l'aéronef.

7. Procédé selon l'une quelconque des revendication 1 à 3,
**caractérisé en ce que** la transmission de données géographiques concerne des aéroports susceptibles d'être impliqués par un vol de l'aéronef.

8. Dispositif de transmission de données géographiques entre au moins un système fournisseur (2) et au moins un système utilisateur (3) qui sont embarqués sur un aéronef, ledit dispositif (1) comprenant ledit système fournisseur (2) et ledit système utilisateur (3),
**caractérisé en ce que** :
- ledit système fournisseur (2) comporte au moins une base de données (4), dans laquelle sont enregistrées lesdites données géographiques, et ceci de façon ordonnée à l'aide au moins d'un classement par surfaces unitaires et dans chaque surface unitaire d'un sous-classement par groupes, lesdites surfaces unitaires étant des surfaces géographiques qui sont disjointes et dont la réunion couvre une surface géographique globale relative à toutes lesdites données géographiques et correspondant à au moins une partie du globe, chacun desdits groupes comprenant les données géographiques relatives à au moins une caractéristique particulière susceptible d'être utilisée lors d'un vol de l'aéronef, et lesdits groupes étant formés de sorte que toutes lesdites données géographiques sont prises en compte ;
- ledit système utilisateur (3) comporte des moyens (5) susceptibles d'émettre une demande en vue d'obtenir des données géographiques, ladite demande permettant d'identifier au moins une surface unitaire et permettant de plus, pour chaque surface unitaire identifiée, d'identifier au moins un groupe ;
- ledit système fournisseur (2) comporte de plus :
■ des moyens (12) pour rechercher dans la base de données (4) les données géographiques qui se trouvent dans l'ensemble des groupes identifiés dans une demande reçue, et ceci pour l'ensemble des surfaces unitaires également identifiées dans cette demande ; et
■ des moyens (8) pour émettre lesdites données géographiques, par surface unitaire identifiée, et pour chaque surface unitaire, par groupe identifié ; et
- ledit dispositif (1) comporte, de plus, au moins une liaison de transmission de données (10), qui est susceptible de transmettre une demande du système utilisateur (3) au système fournisseur (2) et qui est susceptible de transmettre des-données géographiques du système fournisseur (2) au système utilisateur (3).

9. Dispositif selon la revendication 8,
**caractérisé en ce que** ledit système fournisseur (2) est un serveur de base de données.

10. Aéronef,
**caractérisé en ce qu'**il comporte un dispositif (1) tel que celui spécifié sous l'une des revendications 8 et 9.

## Claims

1. A method of transmitting geographical data between at least one provider system (2) and at least one user system (3) that are on board an aircraft,
**characterized in that**:
A/ in a preliminary step:
- an overall geographical area relating to all of said geographical data and corresponding to at least a part of the globe is subdivided into a plurality of unitary areas, that are separate geographical areas, the combination of which covers all of said overall geographical area;
- for each of said unitary areas, the geographical data relating to a unitary area is grouped together into a plurality of different groups, each of which comprises the geographical data relating to at least one particular characteristic likely to be used in a flight of the aircraft, said groups being formed such that all of said geographical data are taken into account; and
- said geographical data are stored in an ordered manner in at least one database (4) of said provider system (2), by creating a classification based on unitary areas and, in each unitary area, a subclassification by groups, each group comprising the corresponding geographical data; and
B/ in a subsequent step:
a) when the user system (3) wants to obtain particular geographical data, it sends a request via a data transmission link (10) to said provider system (2), said request making it possible to identify at least one unitary area and also making it possible, for each identified unitary area, to identify at least one group;
b) when such a request is received by said provider system (2), the latter searches in said database (4) for the geographical data that are located in all of the groups identified in the request, and this is done for all of the unitary areas also identified in this request; and
c) said provider system (2) transmits said geographical information, for each identified unitary area, and for each unitary area per identified group, to said user system (3) via said data transmission link (10).

2. The method as claimed in claim 1,
**characterized in that** each unitary area is a substantially rectangular area, a first side of which has a length corresponding to a predetermined latitude value and of which a second side adjacent to this first side has a length corresponding to a predetermined longitude value.

3. The method as claimed in claim 1,
**characterized in that** said overall geographical area is subdivided into unitary areas, according to at least one of the following sets of characteristics:
- state boundaries;
- time zones;
- air traffic control areas.

4. The method as claimed in any one of claims 1 to 3,
**characterized in that** the transmission of geographical data relates to a set of unitary areas making it possible to cover a corridor of predetermined width along a flight plan.

5. The method as claimed in claim 4,
**characterized in that** said unitary areas are transmitted, in succession, according to their geographical position along the flight plan, in the direction corresponding to the flight of the aircraft following this flight plan.

6. The method as claimed in any one of claims 1 to 3,
**characterized in that** the transmission of geographical data relates to an area of predetermined size that is situated around the current position of the aircraft.

7. The method as claimed in any one of claims 1 to 3, **characterized in that** the transmission of geographical data relates to airports likely to be involved in a flight of the aircraft.

8. A device for transmitting geographical data between at least one provider system (2) and at least one user system (3) that are on board an aircraft, said device (1) comprising said provider system (2) and said user system (3),
**characterized in that**:
- said provider system (2) comprises at least one database (4), in which said geographical data are stored in an ordered fashion using at least one classification by unitary areas and, within each unitary area, a subclassification by groups, said unitary areas being geographical areas that are separate and the combination of which covers an overall geographical area relating to all of said geographical data and corresponding to at least a part of the globe, each of said groups comprising the geographical data relating to at least one particular characteristic likely to be used in a flight of the aircraft, and said groups being formed such that all of said geographical data are taken into account;
- said user system (3) comprises means (5) capable of sending a request in order to obtain geographical data, said request making it possible to identify at least one unitary area and also making it possible, for each identified unitary area, to identify at least one group;
- said provider system (2) also comprises:
■ means (12) for searching in the database (4) for the geographical data that are located in all of the groups identified in a received request, and do so for all of the unitary areas also identified in this request; and
■ means (8) for sending said geographical data, per identified unitary area, and for each unitary area, per identified group; and
- said device (1) also comprises at least one data transmission link (10), that is capable of transmitting a request from the user system (3) to the provider system (2) and that is capable of transmitting geographical data from the provider system (2) to the user system (3).

9. The device as claimed in claim 8,
**characterized in that** said provider system (2) is a database server.

10. An aircraft,
**characterized in that** it comprises a device (1) such as that specified under one of claims 8 and 9.

## Patentansprüche

1. Verfahren zur Übertragung geografischer Daten zwischen mindestens einem Providersystem (2) und mindestens einem Benutzersystem (3), die sich an Bord eines Luftfahrzeuges befinden, **dadurch gekennzeichnet, dass**:
A/ in einem einleitenden Schritt:
- eine geografische Fläche der Erde, die sich auf die Gesamtheit der geografischen Daten bezieht und die mindestens einem Teil der Erde entspricht, in mehrere Einzelflächen zerlegt wird, die separate geografische Flächen sind, deren Zusammenführung die gesamte geografische Fläche der Erde abdeckt;
- für jede der Einzelflächen die geografischen Daten, die sich auf eine Einzelfläche beziehen, zu mehreren unterschiedlichen Gruppen gruppiert werden, von denen jede die geografischen Daten enthält, die sich auf mindestens ein bestimmtes Charakteristikum beziehen, das bei einem Flug des Luftfahrzeuges genutzt werden kann, wobei die Gruppen so gebildet werden, dass alle geografischen Daten mit einbezogen werden; und
- die geografischen Daten in geordneter Weise in mindestens einer Datenbank (4) des Providersystems (2) gespeichert werden, indem eine Klassifizierung nach Einzelflächen und innerhalb jeder Einzelfläche eine Unterklassifizierung nach Gruppen vorgenommen wird, wobei jede Gruppe die entsprechenden geografischen Daten enthält; und
B/ in einem darauffolgenden Schritt:
a) das Benutzersystem (3), wenn es bestimmte geografische Daten zu erhalten wünscht, eine Anfrage über eine Datenübertragungsverbindung (10) an das Providersystem (2) sendet, wobei die Anfrage es ermöglicht, mindestens eine Einzelfläche zu identifizieren, und es ferner ermöglicht, für jede identifizierte Einzelfläche mindestens eine Gruppe zu identifizieren;
b) das Providersystem (2), wenn dieses eine derartige Anfrage empfängt, in der Datenbank (4) die geografischen Daten sucht, die sich in der Gesamtheit der in der Anfrage identifizierten Gruppen befinden, und dies für die Gesamtheit der Einzelflächen, die ebenfalls in dieser Anfrage identifiziert werden; und
c) das Providersystem (2) die geografischen Informationen pro identifizierte Einzelfläche, und für jede Einzelfläche, pro identifizierte Gruppe an das Benutzersystem (3) über die Datenübertragungsverbindung (10) übermittelt.

2. Verfahren nach Anspruch 1, **dadurch gekennzeichnet, dass** jede Einzelfläche eine im Wesentlichen rechteckige Fläche ist, von der eine erste Seite eine Länge aufweist, die einem vorausbestimmten geografischen Breitenwert entspricht und von der eine zweite Seite, die an diese erste Seite angrenzt, eine Länge aufweist, die einem vorausbestimmten geografischen Längenwert entspricht.

3. Verfahren nach Anspruch 1, **dadurch gekennzeichnet, dass** die geografische Fläche der Erde in Abhängigkeit von mindestens einer der Mengen folgender Charakteristika in Einzelflächen zerlegt wird:
- Staatsgrenzen;
- Zeitzonen;
- Luftraumkontrollgebiete.

4. Verfahren nach einem der Ansprüche 1 bis 3, **dadurch gekennzeichnet, dass** die Übertragung geografischer Daten eine Menge von Einzelflächen betrifft, die es ermöglichen, einen Streifen mit einer vorausbestimmten Breite entlang eines Flugplanes abzudecken.

5. Verfahren nach Anspruch 4, **dadurch gekennzeichnet, dass** die Einzelflächen nacheinander je nach ihrer geografischen Position entlang des Flugplanes entsprechend der Flugrichtung des Luftfahrzeuges gemäß diesem Flugplan übermittelt werden.

6. Verfahren nach einem der Ansprüche 1 bis 3, **dadurch gekennzeichnet, dass** die Übertragung geografischer Daten eine Zone mit vorausbestimmter Größe betrifft, die sich rund um die aktuelle Position des Luftfahrzeuges befindet.

7. Verfahren nach einem der Ansprüche 1 bis 3, **dadurch gekennzeichnet, dass** die Übertragung geografischer Daten Flughäfen betrifft, die in einen Flug des Luftfahrzeuges involviert sein können.

8. Vorrichtung zur Übertragung geografischer Daten zwischen mindestens einem Providersystem (2) und mindestens einem Benutzersystem (3), die sich an Bord eines Luftfahrzeuges befinden, wobei die Vorrichtung (1) das Providersystem (2) und das Benutzersystem (3) umfasst, **dadurch gekennzeichnet, dass**:
- das Providersystem (2) mindestens eine Datenbank (4) umfasst, in der die geografischen Daten gespeichert sind, und dies in geordneter Weise mithilfe mindestens einer Klassifizierung nach Einzelflächen und innerhalb jeder Einzelfläche mithilfe einer Unterklassifizierung nach Gruppen, wobei die Einzelflächen geografische Flächen sind, die separat sind und deren Zusammenführung eine geografische Fläche der Erde abdeckt, die sich auf alle geografischen Daten bezieht und mindestens einem Teil der Erde entspricht, wobei jede der Gruppen die geografischen Daten enthält, die sich auf mindestens ein bestimmtes Charakteristikum beziehen, das bei einem Flug des Luftfahrzeuges genutzt werden kann, und wobei die Gruppen so gebildet werden, dass alle geografischen Daten mit einbezogen werden;
- das Benutzersystem (3) Mittel (5) umfasst, die imstande sind, eine Anfrage auszusenden, um geografische Daten zu erhalten, wobei die Anfrage es ermöglicht, mindestens eine Einzelfläche zu identifizieren, und es ferner ermöglicht, für jede identifizierte Einzelfläche mindestens eine Gruppe zu identifizieren;
- das Providersystem (2) ferner Folgendes umfasst:
■ Mittel (12), um die geografischen Daten, die sich in der Gesamtheit der in einer empfangenen Anfrage identifizierten Gruppen befinden, in der Datenbank (4) zu suchen, und dies für die Gesamtheit der Einzelflächen, die ebenfalls in dieser Anfrage identifiziert werden; und
■ Mittel (8), um die geografischen Daten pro identifizierte Einzelfläche, und für jede Einzelfläche, pro identifizierte Gruppe zu senden; und
- die Vorrichtung (1) ferner mindestens eine Datenübertragungsverbindung (10) umfasst, die imstande ist, eine Anfrage des Benutzersystems (3) an das Providersystem (2) zu übermitteln, und die imstande ist, geografische Daten des Providersystems (2) an das Benutzersystem (3) zu übermitteln.

9. Vorrichtung nach Anspruch 8, **dadurch gekennzeichnet, dass** das Providersystem (2) ein Datenbankserver ist.

10. Luftfahrzeug, **dadurch gekennzeichnet, dass** es eine Vorrichtung (1) wie jene umfasst, die in einem der Ansprüche 8 und 9 beschrieben ist.
